Europäisches Patentamt

European Patent Office

Office européen des brevets

(19)

(11) Veröffentlichungsnummer : **0 100 925**
**B1**

(12)

# EUROPÄISCHE PATENTSCHRIFT

(45) Veröffentlichungstag der Patentschrift :
**30.09.87**

(21) Anmeldenummer : **83107055.2**

(22) Anmeldetag : **19.07.83**

(51) Int. Cl.⁴ : **F 16 J 13/02**, F 16 J 13/10,
F 16 J 15/48

(54) **Hochdruckbehälter mit Innenverschluss.**

(30) Priorität : **16.08.82 DE 3230457**

(43) Veröffentlichungstag der Anmeldung :
**22.02.84 Patentblatt 84/08**

(45) Bekanntmachung des Hinweises auf die Patenterteilung : **30.09.87 Patentblatt 87/40**

(84) Benannte Vertragsstaaten :
**AT BE CH DE FR GB IT LI LU NL SE**

(56) Entgegenhaltungen :
DE-A- 2 054 328
DE-B- 1 767 884
DE-C-   750 620
FR-A- 1 255 284
GB-A- 1 594 936
RHEINSTAHL-TECHNIK, Band 9, Nr. 3, 1971, Essen H. STROHMEIER "Hochdruck-Apparate für die chemische Industrie und ihre Verschlüsse", Seiten 104-113
CHEMIKER-ZEITUNG, Band 95, Nr. 1, 1971, Heidelberg J. EHLE et al. "Grundlagen des Hochdruck-Apparatebaues", Seiten 28-33
VDI-ZEITSCHRIFT, Band 104, Nr. 11, 11. April 1962, Düsseldorf Seite 479

(73) Patentinhaber : **Uhde GmbH**
**Friedrich-Uhde-Strasse 15**
**D-4600 Dortmund 1 (DE)**

**SKW Trostberg Aktiengesellschaft**
**Dr.-Albert-Frank-Strasse 32 Postfach 1150/1160**
**D-8223 Trostberg (DE)**

(72) Erfinder : **Körner, Jörg-Peter**
**Baurothstrasse 7**
**D-5800 Hagen 1 (DE)**
Erfinder : **Jekat, Herbert, Dr.**
**Sonnenleite 9**
**D-8223 Trostberg (DE)**

## Beschreibung

Die Erfindung betrifft einen Hochdruck-Behälter mit Innenverschluß, wobei der Innenverschluß im wesentlichen aus einem Deckel, Stützsegmenten und einem Dichtelement besteht, und wobei der Deckel an seiner äußeren Oberseite eine Kegelstumpf-Fläche aufweist, die Stützsegmente als mehrteiliger Ring ausgebildet sind, die Stützsegmente und der Flansch an den kraftübertragenden Anlageflächen ebenfalls Kegelstumpf-Flächen mit gleichen Winkeln an zugeordneten Flächen aufweisen. Abdichtungen der genannten Art sind insbesondere zweckdienlich für häufiges Öffnen und Schließen bei entsprechenden Füll- und Entleerungsvorgängen.

Hochdruck-Behälter lassen sich aus der chemischen Technologie nicht mehr wegdenken. So erfordern Synthese- oder Polymerisations-Verfahren großvolumige Druckbehälter, die für Drücke bis zu 500 bar und darüber ausgelegt sind. Solche Druckbehälter arbeiten jedoch z. B. bei der Ammoniaksynthese oder der Ethylenpolymerisation normalerweise über längere Zeiträume, d. h. mehrere Monate oder Jahre bei ein und derselben Druckbelastung. Größere Druckschwankungen sind im wesentlichen nur beim An- und Abfahren solcher Hochdruckanlagen zu erwarten.

Da bei einem Druckbehälter der zylindrische Mantel den größten Gewichtsanteil erfordert, sind auf diesem Gebiet eine Reihe von Konstruktionen entwickelt worden, den Druckmantel im Hinblick auf die benötigte Materialmenge optimal auszuführen.

Einen Überblick über solche Konstruktionen geben die zusammenfassenden Arbeiten von H. Strohmeier in Rheinstahl Technik, 9. Jahrgang, Heft 3/71, Seite 104 ff., sowie von J. Ehle und A. Pollanz in Chemikerzeitung, 95. Jahrgang (1971) Nr. 1, Seite 28 ff.

Besondere Bedeutung kommt bei den Hochdruckbehältern dem Verschluß mit seiner Abdichtung zu. Je nach vorgesehenem Verwendungszweck besitzt ein Hochdruckbehälter 2 montierbare Verschlüsse oder nur einen montierbaren Verschluß und einen festangeschweißten oder angeschmiedeten Boden. Während sogenannte Außenverschlüsse mit auf dem Flansch des Druckbehälters aufliegendem Deckel und Arretierung mittels Stiftschrauben oder Klammer nur für Hochdruckbehälter von geringen Innendurchmessern anwendbar sind — das Gewicht des Verschlusses wird sonst zu groß und unhandlich und damit zu teuer für die Herstellung und Montage — haben Innenverschlüsse ein weites Anwendungsfeld in bezug auf Innendurchmesser der Hochdruckgefäße.

Aus der DE-B-1 767 884 und der DE-A-2 054 328 sind Abdichtungen für die Deckel von Druckbehältern bekannt, die aus O-Ringen und einem auf sie durch Anziehen wirksam werdenden Dichtungsringkörper bzw. nur aus einem O-Ring bestehen. Diese Art der Abdichtung hat sich bei vielzähligem Ein- und Ausbau des Deckels pro Tag infolge der Unmöglichkeit des steten gleichmäßigen Anziehens der Bolzen als nachteilig erwiesen, da die O-Ringe schnell verschleißen und ihre Dichtfunktion verlieren. Ein O-Ring als einzige Dichtung, wie nach DE-A-2 054 382, ist für Hochdruckbehälter von größerem Durchmesser, für hohe Drücke und vielzähligem Ein- und Ausbau nicht ausreichend. Darüberhinaus tritt Undichtigkeit auf, wenn bei hohem Betriebsdruck das Gefäß sich geringfügig aufweitet.

Nach der DE-C-750 620 ist ein Verschluß für Hochdruckbehälter und dergleichen bekannt, bei dem ein metallischer Dichtungsring die Abdichtungsfunktion für den Deckel übernimmt. Der metallische Dichtungsring muß über eine Mehrzahl von Zugschrauben nach jedem Schließvorgang eine Vorspannung erfahren und auseinandergespreizt werden. Für den Öffnungsvorgang muß nach der Druckentlasung des Behälters die Vorspannung des metallischen Dichtungsringes durch Lösen der Zugschrauben abgebaut werden, bevor der Deckel entfernt werden kann. Der komplizierte Aufbau und die Unwahrscheinlichkeit der Einstellung einer gleichmäßigen Vorspannung über eine Vielzahl von Zugschrauben machen diesen Verschluß ungeeignet für eine Vielzahl von täglichen Schließ- und Öffnungsvorgängen.

Die Aufgabe der vorliegenden Erfindung besteht darin, eine Abdichtung für einen Druckbehälter mit selbstdichtendem Innenverschluß zu schaffen, der den geänderten Anforderungen genügt und Nachteile bekannter Konstruktionen nicht aufweist.

Erfindungsgemäß wird der Hochdruckbehälter ausgebildet nach den Merkmalen des Hauptanspruchs.

Um weitere Vorteile zu erzielen, wird die Abdichtung für den Hochdruckbehälter gemäß den Kennzeichen der Unteransprüche ausgestaltet.

Die mit der erfindungsgemäßen neuen Abdichtung für einen Hochdruck-Behälter erzielbaren Vorteile bestehen insbesondere darin, daß durch die örtliche Trennung von Stütz- und Dichtflächen es nicht mehr zu plastischen Verformungen an den Stützflächen kommt. Es tritt demzufolge auch keine Materialverschweißung auf. Die Einzelteile des Verschlusses lassen sich einfach und schnell lösen. Damit werden kurze Öffnungs- und Schließzeiten bei dem intermittierenden Betrieb der Hochdruckanlage erzielt.

Die Dichtung ist nur dem Innendruck ausgesetzt und sie wird nicht durch Kraftspitzen belastet, z. B. als Resultierende aus einem Kräfteparallelogramm.

Bei Hochdruckbehältern mit großem Innendurchmesser und damit zunehmender Unrundheit infolge der Bearbeitung, schwerer werdendem Deckel und demzufolge geringerer Feinfühligkeit beim Zusammenbau bzw. Lösen des Verschlusses wird die Dichtung weniger strapaziert, da nach der Erfindung das mehrteilige Dichtelement auf dem Deckelboden mittels der Halterung radial verschiebbar positioniert ist. Selbst wenn der Deckel nicht absolut zentral sitzt, kann das Dichtelement mit den Dichtringen sich zentral zur Behälterinnenbohrung einstellen.

Werden Hochdruckbehälter der beschriebenen Art im Lebensmittelbereich eingesetzt, oder ist die Füllung besonders agressiv, werden Auskleidungen erforderlich, so z. B. aus Edelstahl. Es hat sich als besonders zweckmäßig und vorteilhaft erwiesen, in den fertigen Hochdruckbehältermantel ein dünnwandiges Hemd mit reichlich Spielpassung einzuziehen, dem im Bereich des später montierten Dichtelementes ein Schleißring angesetzt ist. Dieser Schleißring ist im Gegensatz zu dem in der Regel aus dünnwandigem Blech gerollten und längsnahtverschweißten Hemd ein Drehteil mit weit geringerer Spielanpassung und geringerer Unrundheit. Die Innenfläche des Schleißringes wird in hoher Oberflächengüte hergestellt, damit die Dichtringe des Dichtelementes leicht darauf gleiten können. Die angearbeitete Fase am Schleißring erlaubt eine fachgerechte Verschweißung mit dem dünnen Hemd ohne daß es zu schädigender Überhitzung des Behältermaterials an der Schweißstelle kommt.

Die Erfindung wird anhand der Zeichnungen beispielhaft erläutert. Es zeigen :

Figur 1 Hochdruckbehälter mit Innenverschluß und radial verschiebbarem L-förmigen Abdichtelement, unter Betriebsdruck

Figur 2 Hochdruckbehälter mit Innenverschluß, eingezogenem Hemd und angesetzten Schleißring, vor erster Druckbelastung.

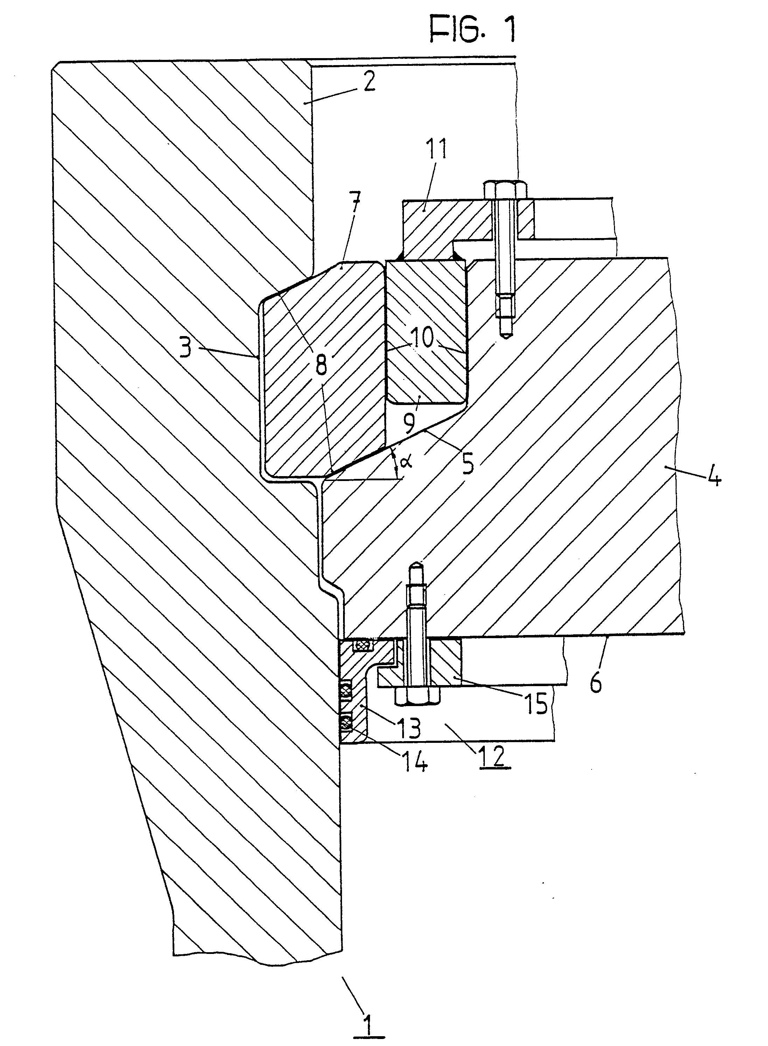

Der Hochdruckbehälter 1 in Fig. 1 der beispielweise aus einem geschmiedeten zylindrischen Mantel besteht, keinerlei Schweißverbindungen an drucktragenden Teilen hat und für häufige Lastwechsel geeignet ist weist am oberen Ende den wulstförmigen Flansch 2 auf mit der Eindrehung 3. Diese Eindrehung 3 ist zum Behälterende hin im Winkel von 15-45° vorzugsweise 25° angeschrägt. Der Deckel 4 weist als besonderes Kennzeichen die an der äußeren Oberseite angebrachte Kegelstumpffläche 5 auf mit einem Winkel $\alpha$ von ebenfalls 15-45° insbesondere etwa 25°. Der auf den Deckelboden 6 wirkende Betriebsdruck von z. B. 300 bar preßt den Deckel 4 gegen die Stützsegmente 7, die als mehrteiliger Ring ausgebildet sind. Die Stützsegmente 7 weisen an den der Kegelstumpffläche 5 des Deckels 4 und der Eindrehung 3 des Behälters zugewandten Stützflächen 8 den gleichen Winkel von etwa 25° auf. Auf diese Weise wird die vom Deckel ausgehende Dichtkraft über diese Stützsegmente direkt in den wulstförmigen Flansch geleitet ohne daß es zu wesentlichen Querkraftkomponenten kommt. Das Sperrelement 9, das als einteiliger geschlitzter Ring oder in Form von einzelnen Ringteilen ausgeführt sein kann, bewirkt mit den Anlageflächen 10 am Deckel 4 und Stützsegment 7 zum einen die Positionierung von Deckel 4 und Stützsegmenten 7 und verhindert, daß bei evtl. auftretenden Querkräften an den Stützelementen diese nach innen abgleiten. Infolge der Abschrägung an den Stützflächen 7 können die Querkräfte jedoch nie solche Werte erreichen, daß es an den Anlageflächen 10 zu plastischen Verformungen und Verschweißungen kommt. Zum Zweck der einfachen Handhabung werden mehrere Sperrelemente 9 mittels eines Halterings 11 fixiert. Eine kraftaufnehmende Funktion hat dieser Haltering nicht.

Die Abdichtung des Deckels 4 gegen den Hochdruckbehälter 1 bei sich aufbauendem Innendruck übernimmt das Dichtelement 12 am Boden des Deckels. Es besteht aus dem Dichtring 13 mit den in Nuten eingelegten Dichtungselementen 14, wie z. B. O-Ringen aus Spezialwerkstoff oder federunterstützte Dichtelemente. Die Wirkungsweise des Dichtringes beruht darauf, daß bei sich aufbauendem Innendruck die Spalte zwischen Dichtung und Deckel und Dichtring und Behälterwand durch Dehnung des Dichtringes derart gemindert werden, daß der Dichtring an Deckelboden und Behälterwand voll anliegt. Die eingesetzten Dichtungselemente 14 können nicht durch die Spalte herausgedrückt werden. Sie dichten vollständig ab. Um Herstellungstoleranzen auszugleichen und die Dichtungen beim Zusammenbau bzw. Lösen weniger zu strapazieren, wird der Dichtring 13 am Deckelboden 6 beweglich angebracht. Der Haltering 15 ist an seiner Außenseite so ausgebildet, daß der Dichtring 13 sowohl radial als auch axial Luft hat und frei beweglich ist. Dadurch werden Bearbeitungstoleranzen in bezug auf Unrundheit von Gefäß- und/oder Deckel- und Zentrierungstoleranzen als Folge der doppelten Kegelstumpfflächen 5 und Stützflächen 8 auf einfache Weise ausgeglichen. Der verschiebbar angeordnete Dichtring 13 erlaubt insbesondere bei größeren Deckeldurchmessern größere Fertigungstoleranzen an Mantel und Deckel des Druckbehälters und garantiert, da er sich bereits bei relativ niedrigen Drücken vollständig an die Wand und den Deckel des Druckbehälters anlegt wobei der Dichtspalt dadurch gegen Null geht, absolute Dichtheit des Innenraumes bei sich aufbauendem Druck.

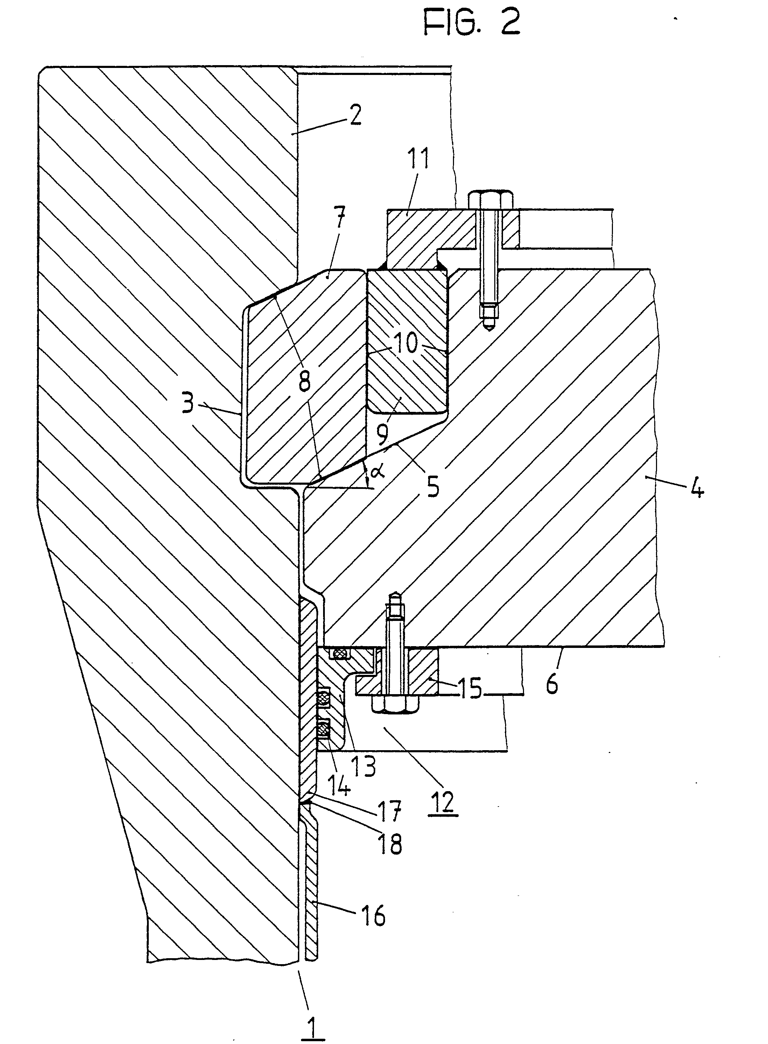

Hochdruckbehälter für die Behandlung von Lebensmitteln oder aggressiver Stoffe werden gemäß Fig. 2 mit einer inneren Auskleidung, einem Hemd aus Sondermetall, versehen. Dieses Hemd 16, z. B. aus Chrom-Nickel-Stahl wird in wirtschaftlich optimaler Weise derart eingebracht, daß es außerhalb des Hochdruckbehälters aus Blechmaterial gerollt und längsnahtgeschweißt wird. Infolge seiner Unrundheit muß es erst mit einem Außendurchmesser-Untermaß von ca. 3-5 mm in bezug auf den Innendurchmesser des Hochdruckbehälters hergestellt werden. Nach dem Einziehen des Hemdes in den Hochdruckbehälter liegt entsprechendes Spiel vor. Das sichere Abdichten des Dichtringes 13 wird hier erreicht, indem an das Hemd ein Schleißring 17 angesetzt wird, und zwar mittels Schweißung an der Fase 18. Der Schleißring 17 ist fast spielfrei eingebaut und seine Innenbohrung weist hohe Oberflächengüte auf. Nach der druckdichten Verschweißung und beim ersten Druckaufbau im Hochdruckbehälter wird das dünnwandige Hemd so gedehnt, daß es zur Anlage an der Behälterinnenwand kommt. Infolge der Rundheit des Schleißringes 17 und seiner inneren Oberflächengüte wird der Dichtring in seiner Dichtfunktion nicht behindert.

Sollte die Dichtwirkung im Verlauf von vielen Öffnungs- und Schließvorgängen nachlassen, kann sowohl der schleißring 17 als auch der Dichtring 13 zeit- und kostengünstig ausgewechselt werden.

Der Boden des Hochdruckbehälters kann, falls er nicht angeschmiedet ist, mit einem konstruktiv gleichartigen Deckel verschlossen werden.

Die Verwendbarkeit der erfindungsgemäßen Abdichtung für einen Druckbehälter ist nicht beschränkt; insbesondere dient der Druckbehälter zur diskontinuierlichen Extraktion pflanzlicher Inhaltstoffe mittels überkritischer Gase.

## Patentansprüche

1. Hochdruckbehälter (1) mit Innenverschluß, wobei der Innenverschluß im wesentlichen aus einem Deckel (4), Stützsegmenten (7) und einem Dichtelement (12) besteht, und wobei der Deckel (4) an seiner äußeren Oberseite eine Kegelstumpf-Fläche (5) aufweist, die Stützsegmente (7) als mehrteiliger Ring ausgebildet sind, die Stützsegmente (7) und der Flansch (2) an den kraftübertragenden Anlageflächen ebenfalls Kegelstumpf-Flächen (8) mit gleichen Winkeln an zugeordneten Flächen aufweisen, dadurch gekennzeichnet, daß mindestens ein Sperrelement (9) die Stützsegmente (7) mit achsparallelen Anlageflächen (10) fixiert und das Dichtelement (12) auf dem Deckelboden (4) mittels einem Haltering (15) radial verschiebbar positioniert ist.

2. Hochdruckbehälter nach Anspruch 1, dadurch gekennzeichnet, daß im Bereich des Dichtelements (12) ein Schleißring (17) an einem dünnwandigen eingezogenen Hemd (16) druckdicht angesetzt ist.

3. Hochdruckbehälter nach Anspruch 1 und 2, dadurch gekennzeichnet, daß der Schleißring (17) ein Drehteil ist mit angearbeiteter Fase (18) an der dem Hemd (16) zugewandten Seite und daß die Spielpassung des Schleißringes zu dem Hochdruckbehälter (1) ein Bruchteil der Spielpassung des Hemdes ist.

## Claims

1. High-pressure vessel (1) with inner closure, the latter mainly comprising the cover (4), the supporting segments (7), and the seal, the outer upper side of the cover (4) having a frustum-shaped face (5), the supporting segments (7) having been designed to form a multipart ring, the load transmission contact surfaces of the supporting segments (7) and of the flange (2) also having frustum-shaped faces (8) with identical angles for assigned surfaces, characterized in that at least one locking element (9) keeps the supporting segments (7) in place, the contact surfaces being parallel to the axis, and that the seal (12) provided for at the bottom of cover (4) is radially movable by a retaining ring (15).

2. High-pressure vessel according to claim 1, characterized in that in the area of the seal (12) a wearing ring (17) is joined by a pressure-tight weld to a thin-walled liner (16).

3. High-pressure vessel according to claims 1 and 2, characterized in that the wearing ring (17) is a turned part with a bevel (18) at the end facing the liner (16) and that the loose fit of the wearing ring on the high-pressure vessel (1) is but a fraction of the loose fit of the liner.

## Revendications

1. Réservoir à haute pression (1) avec dispositif de fermeture intérieure, ce dernier comprenant principalement un couvercle (4), des segments de support (7) et un élément d'étanchéité (12), la partie supérieure extérieure du couvercle (4) ayant une face tronconique (5), les segments de support (7) étant conçus comme bague composée, les parties de contact à transmission de force des segments de support (7) et de la tubulure (2) ayant également des faces tronconiques (8) avec des angles identiques pour des surfaces assignées, caractérisé en ce qu'au moins un élément de serrage (9) à faces de contact parallèle à l'axe immobilise les segments de support (7) et que l'élément d'étanchéité (12) est radialement déplaçable sur le fond du couvercle (4) moyennant un anneau d'arrêt (15).

2. Réservoir à haute pression selon revendication 1, caractérisé en ce que dans la zone de l'élément d'étanchéité (12) une bague d'usure (17) est fixée par soudure étanche à une chemise intérieure à paroi mince (16).

3. Réservoir à haute pression selon revendications 1 et 2, caractérisé en ce que la bague d'usure (17) est un élément tourné pourvu d'un chanfrein (18) en face de la chemise (16) et que le jeu de la bague d'usure vis-à-vis le réservoir à haute pression (1) n'est qu'une fraction de celui de la chemise.

0 100 925

FIG. 1

0 100 925

FIG. 2